# EUROPÄISCHE PATENTSCHRIFT

(11) **EP 1 444 494 B1**
(45) Veröffentlichungstag und Bekanntmachung des Hinweises auf die Patenterteilung: **29.07.2009**
(21) Anmeldenummer: 02776790.4
(22) Anmeldetag: 08.10.2002
(51) Int. Cl.: G01L 23/22

(54) **VERFAHREN UND VORRICHTUNG ZUR STÖRGERÄUSCHAUSBLENDUNG BEI DER KLOPFERFASSUNG IN EINER BRENNKRAFTMASCHINE**
METHOD AND DEVICE FOR BLANKING OUT INTERFERENCE NOISE DURING KNOCK RECORDING IN AN INTERNAL COMBUSTION ENGINE
PROCEDE ET DISPOSITIF DE SUPPRESSION DU BRUIT PARASITE LORS DE LA DETECTION DES COGNEMENTS DANS UN MOTEUR A COMBUSTION INTERNE

(30) Priorität: 06.11.2001 DE 10154422
(43) Veröffentlichungstag der Anmeldung: 11.08.2004
(73) Patentinhaber: ROBERT BOSCH GMBH, 70442 Stuttgart (DE)
(72) Erfinder: SAULER, Juergen, 70192 Stuttgart (DE); BAEUERLE, Michael, 71254 Ditzingen-Heimerdingen (DE)
(86) Internationale Anmeldenummer: PCT/DE2002/003792
(87) Internationale Veröffentlichungsnummer: WO 2003/040677

(56) Entgegenhaltungen:
- EP-A- 0 281 377
- WO-A-96/00889
- FR-A- 2 449 798
- GB-A- 2 154 657
- US-A- 5 505 176

## Beschreibung

### STAND DER TECHNIK

Die vorliegende Erfindung betrifft ein Verfahren und eine Vorrichtung zur Störgeräuschausblendung bei der Klopferfassung in einer Brennkraftmaschine.

Eine abnormale Störung der Verbrennung bei Brennkraftmaschinen bildet bekannterweise das Klopfen, welches mechanische Druckwellen bzw. Körperschall hoher Frequenz verursacht, die bei längerem Betrieb gravierende Motorschäden verursachen können.

Die Klopfneigung kann durch verschiedene Maßnahmen herabgesetzt werden, unter anderem durch kurze Brennwege mit einer mittigen Zündkerzenlage, einen kompakten Brennraum, hohe Turbulenz im Brennraum, Kraftstoff mit höherer Oktanzahl, Vermeiden von heissen Stellen im Brennraum, geringeres Verdichtungsverhältnis und kältere Gemischansaugtemperatur, etc.

Da der Motor bei gutem Kraftstoffverbrauch immer in der Nähe der Klopfgrenze betrieben werden soll, haben elektronische Motorsteuerungen üblicherweise eine Klopfregelung. Ein wichtiger Bestandteil dieser Klopfregelung ist ein Klopfsensor, welcher an der Zylinderwand die hochfrequenten Schwingungen des Klopfens erfaßt und in elektrische Schwingungen umwandelt, welche dann hinsichtlich des Vorliegens von Klopfen analysiert werden.

Bekannte Klopfsensoren sind zu diesem Zweck über eine Eingangseinschaltung an einem Klopfsensor-Auswertungs-IC angeschlossen. In dem Klopfsensor-Auswertungs-IC wird das hochfrequente Sensorsignal verstärkt, gefiltert und während eines Beobachtungszeitraums (Meßfenster) aufintegriert. Das Integratorergebnis wird von einem Mikrocontroller eingelesen, aufbereitet und zur Klopferkennung verwendet. Aus dem aufbereiteten Integratorsignal wird ein gleitender Mittelwert (Referenzpegel) bestimmt, anhand dessen sich das Auftreten von Klopfen ermitteln läßt, wie auch bekannt aus FR 2449 798.

Klopfsensoren erfassen jedoch nicht nur den von der Verbrennung herrührenden Körperschall, sondern auch Körperschall-Störgeräusche. Beispielsweise kann es bei direkteinspritzenden 3- und 6-Zylinder Motoren zu Überschneidungen zwischen dem Messfenster für das Klopfen und dem Einspritzbeginn bzw. Einspritzende, d.h. der jeweiligen Betätigung des Einspritzventils, kommen.

Die Geräusche, welche das Einspritzventil beim Öffnen bzw. Schließen verursacht, koppeln dabei auf das Motorgehäuse über und werden im vom Klopfsensor aufgenommenen Körperschall sichtbar.

Diese Störgeräusche können, wenn sie in das Messfenster hineinwandern, von der Klopfregelung irrtümlicherweise als Klopfen interpretiert werden. Dies führt zu unnötigen Zündwinkel-Spätverstellungen und damit zu einem unnötigerweise verringerten Motordrehmoment.

Wenn das Öffnen bzw. Schließen des Einspritzventils dauerhaft im Messfenster für das Klopfen liegt, wird dadurch der Referenzpegel der Klopferkennung erhöht, wodurch die Klopferkennung verschlechtert wird. Dies kann dazu führen, dass Klopfen nicht erkannt werden kann und zu Motorschäden führt.

Neben den bereits erwähnten 3- und 6-Zylinder Motoren kann das Problem der Überlappung der Einspritzung und des Messfensters für das Klopfen auch in Zukunft bei Motoren mit Mehrfacheinspritzung bei irgendeiner anderen Anzahl von Zylindern auftreten.

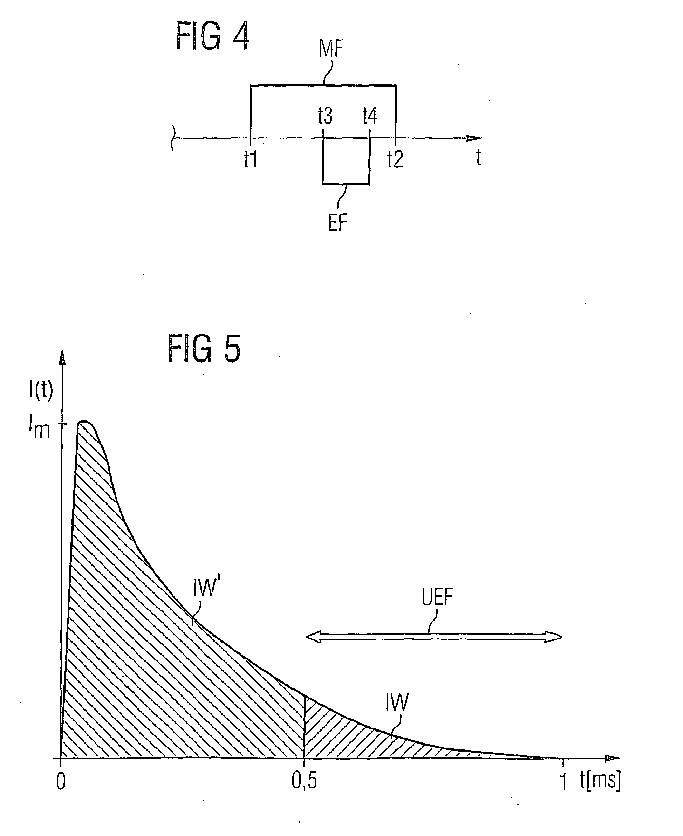

Figur 4 illustriert die der vorliegenden Erfindung zugrunde liegende Problematik näher anhand des zeitlichen Verlaufs des Messfensters für die Klopfregelung und des Störgeräuschfensters, welches beispielsweise durch das Öffnen bzw. Schließen des Einspritzventils auftritt.

In Figur 4 bezeichnet MF das zeitliche Messfenster, EF das zeitliche Störfenster, t1 bis t4 Zeitpunkte und t allgemein die Zeit.

Bei der Darstellung in Figur 4 läuft das Messfenster von einer ersten Zeit t1 bis zu einer zweiten Zeit t2. Innerhalb dieses Zeitintervalls wird bekanntermaßen das Ausgangssignal des Klopfsensors integriert, um einen Sensor-signal-Integralwert zu erhalten. Typischerweise beträgt das Messfenster MF einige Millisekunden.

Das zeitliche Störfenster EF dauert von der Zeit t3 bis zur Zeit t4 und liegt vollständig innerhalb des Messfensters MF. Der im Störfenster EF zusätzlich erfasste Körperschall verfälscht somit den ermittelten Sensorsignal-Integralwert.

Figur 5 zeigt einen typischen Intensitätsverlauf I(t) des Störsignals innerhalb des Störfensters EF, welches beispielsweise vom Öffnen bzw. Schließen des Einspritzventils herrührt.

Wie aus Figur 5 ersichtlich, dauert die Störung typischerweise 1 ms, wobei der Zeitverlauf zunächst einen raschen Anstieg auf einen Maximalwert Im und danach einen exponentiellen Abfall auf 0 vorsieht. Die Bezugszeichen IW und IW' bezeichnen die Integralwerte des zeitlichen Intensitätsverlaufs zwischen 0 und 0,5 ms bzw. zwischen 0,5 und 1 ms. Wie aus Figur 5 deutlich ersichtlich, liegt der Großteil der integralen Intensität, nämlich IW', im Bereich zwischen 0 und 0,5 ms, also zu Beginn des Öffnen bzw. des Schließens des Einspritzventils.

### VORTEILE DER ERFINDUNG

Das erfindungsgemäße Verfahren mit den Merkmalen des Anspruchs 1 bzw. die entsprechende Vorrichtung nach Anspruch 8 weisen gegenüber dem bekannten Lösungsansatz den Vorteil auf, daß sie eine genauere Klopferfassung und -regelung ermöglichen.

Die der vorliegenden Erfindung zugrunde liegende Idee liegt darin, dass Körperschall, welcher von einer identifizierbaren Störquelle herrührt, beispielsweise einem Einspritzventil, von dem Klopfsensorsignal-Integralwert abgezogen wird, so dass nur noch der vom Klopfen verursachte Körperschall ausgewertet wird.

Im Falle des Hineinwanderns in das Messfenster werden durch diese Maßnahme Fehlererkennungen und damit ein unnötiges Spätverstellen der Zündwinkel vermieden. Im stationären Fall wird die Erhöhung des Referenzpegels und damit eine Verschlechterung der Klopferkennung vermieden.

In den Unteransprüchen finden sich vorteilhafte Weiterbildungen und Verbesserungen des jeweiligen Gegenstandes der Erfindung.

Gemäß einer bevorzugten Weiterbildung tritt das Störgeräusch während eines zeitlichen Störfensters auftritt, welches höchstens so groß ist wie das zeitliche Meßfenster. Dabei weist das Bilden des Korrekturwerts folgende Schritte auf: Bilden eines maximalen integralen Störsignalanteils; Erfassen eines zeitlichen Überlappungsfensters zwischen dem zeitlichen Meßfenster und dem zeitlichen Störfenster; und Gewichten des maximalen integralen Störsignalanteils mit einem Gewichtungsfaktor, welcher basierend auf dem zeitlichen Überlappungsfenster gebildet wird.

Gemäß einer weiteren bevorzugten Weiterbildung wird zum Bilden des Gewichtungsfaktors ein zeitlicher Intensitätsverlauf des gesamten Störgeräuschs bereitgestellt wird, womit ein Integralwert des Intensitätsverlaufs über das Überlappungsfenster ins Verhältnis zum Gesamtintegralwert des Intensitätsverlaufs gesetzt wird.

Gemäß einer weiteren bevorzugten Weiterbildung werden zum Bilden des maximalen integralen Störsignalanteils folgende Schritte durchgeführt: relatives zeitliches Vorsehen des zeitlichen Störfensters und des zeitlichen Meßfensters derart, daß das zeitliche Störfenster vollständig im zeitlichen Meßfenster (MF) liegt; Bilden eines ersten Sensorsignal-Integralwerts; relatives zeitliches Vorsehen des zeitlichen Störfensters und des zeitlichen Meßfensters derart, daß das zeitliche Störfenster vollständig außerhalb vom zeitlichen Meßfenster liegt; Bilden eines zweiten Sensorsignal-Integralwerts; und Subtrahieren des zweiten Sensorsignal-Integralwerts vom ersten Sensorsignal-Integralwert, um den maximalen integralen Störsignalanteils zu erhalten.

Gemäß einer weiteren bevorzugten Weiterbildung ist das Störgeräusch Körperschall, welcher von einer Betätigung eines Einspritzventils herrührt.

Gemäß einer weiteren bevorzugten Weiterbildung wird das Bilden des maximalen integralen Störsignalanteils an einem Arbeitspunkt durchgeführt, an dem keine Klopfregelung aktiv ist.

Gemäß einer weiteren bevorzugten Weiterbildung wird das Bilden des maximalen integralen Störsignalanteils bei jedem Motorstart erneut durchgeführt.

### ZEICHNUNGEN

Ausführungsbeispiele der Erfindung sind in den Zeichnungen dargestellt und in der nachfolgenden Beschreibung näher erläutert.

Es zeigen:
- Fig. 1: die wesentlichen Prozessschritte zum Ermitteln eines maximalen integralen Störsignalbeitrags gemäß einer Ausführungsform der vorliegenden Erfindung;
- Fig. 2: den Fall, dass bei der Störsignal-Ausblendung das Störfenster nur teilweise mit dem Messfenster überlappt;
- Fig. 3: eine Ausführungsform der erfindungsgemäßen Vorrichtung zur Störgeräuschausblendung bei der Klopferfassung einer Brennkraftmaschine;
- Fig. 4: die der vorliegenden Erfindung zugrunde liegende Problematik anhand des zeitlichen Verlaufs des Messfensters für die Klopfregelung und des Störgeräuschfensters; und
- Fig. 5: einen typischen Intensitätsverlauf I(t) des Störsignals innerhalb des Störfensters EF, welches beispielsweise vom Öffnen bzw. Schließen des Einspritzventils herrührt.

### BESCHREIBUNG DER AUSFÜHRUNGSBEISPIELE

In den Figuren bezeichnen gleiche Bezugszeichen gleiche oder funktionsgleiche Bestandteile.

Eine Ausführungsform der Erfindung wird in Bezug auf die Betätigung (Öffnen bzw. Schließen) eines Einspritzventils erläutert.

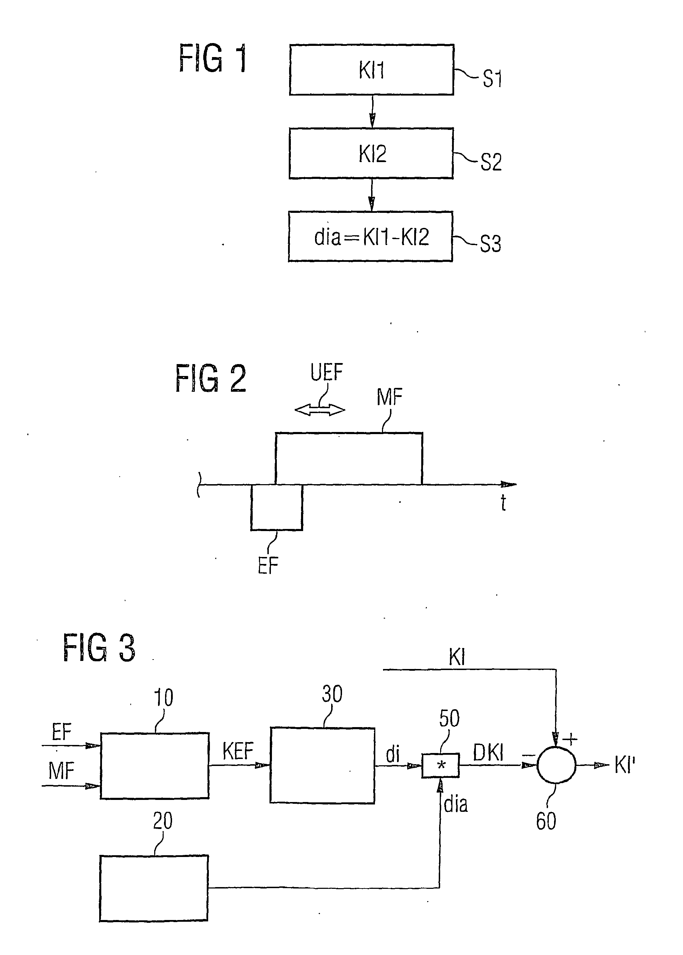

Figur 1 zeigt die wesentlichen Prozessschritte zum Ermitteln eines maximalen integralen Störsignalbeitrags gemäß einer Ausführungsform der vorliegenden Erfindung.

Gemäß Figur 1 erfolgt in einem Schritt S1 die Bildung eines ersten Sensorsignal-Integralwerts KI1. Zur Bildung dieses ersten Sensorsignal-Integralwerts KI1 wird eine zeitliche Überlappung des zeitlichen Störfensters EF und des zeitlichen Messfensters MF vorgesehen, so dass das zeitliche Störfenster EF vollständig im zeitlichen Messfenster MF liegt. Mit anderen Worten gibt der erste Sensorsignal-Integralwert KI1 einen maximal verfälschten Sensorsignal-Integralwert an.

Im Schritt S2 gemäß Figur 1 erfolgt die Bildung eines zweiten Sensorsignal-Integralwerts KI2, nachdem das zeitliche Störfenster EF und das zeitliche Messfenster MF vollständig auseinander gelegt worden sind, also überhaupt keine Überlappung mehr aufweisen. Der zweite Sensorsignal-Integralwert KI2 gibt also den ungestörten Fall des Sensorsignal-Integralwerts wieder.

Im Schritt S3 gemäß Figur 1 erfolgt die Bildung des maximalen integralen Störsignalbeitrags dia durch Subtraktion des zweiten Sensorsignal-Integralwerts KI2 vom ersten Sensorsignal-Integralwert KI1. Der Wert dia gibt also den Integralbeitrag der Störung zum Gesamtsignal wieder, wenn das Störfenster EF vollständig innerhalb des Messfensters MF liegt.

Also ist der vom Klopfsensor-Auswerte-IC ermittelte Sensorsignal-Integralwert immer dann um den Betrag des Wertes dia nach unten zu korrigieren, wenn das Störfenster vollständig im Meßfenster liegt.

Aufgrund der Toleranzen der Einspritzventile und des Klopfsensors wird der Wert dia zweckmäßigerweise adaptiv ermittelt, beispielsweise einmal pro Motorstart in einer inaktiven Phase der Klopfregelung.

Figur 2 illustriert den Fall, dass bei der Störsignal-Ausblendung das Störfenster EF nur teilweise mit dem Messfenster MF überlappt. Diese Überlappungszeitdauer ist in Figur 2 mit UEF bezeichnet. Mit Rückbezug auf Figur 5 liegt bei dem Beispiel nach Figur 2 nur die zweite Hälfte des Störsignals innerhalb des Messfensters, nämlich die Hälfte zwischen 0,5 und 1 ms. Demzufolge addiert sich auch nur der in Figur 5 mit IW bezeichnete Integralwert der Störintensität zum Sensorsignal-Integralwert. Eine derartige nur teilweise Überlappung des Störfensters EF mit dem Messfenster MF wird bei der Ausführungsform des erfindungsgemäßen Verfahrens berücksichtigt.

Bei der Ausführungsform des erfindungsgemäßen Verfahrens wird der gemäß Figur 1 berechnete maximale integrale Störsignalbeitrag dia mit einem Gewichtungsfaktor di gewichtet, welcher basierend auf dem zeitlichen Überlappungsfenster UEF und der Intensitätsverteilungsfunktion I(t) gebildet wird. Letztere kann dabei entweder theoretisch oder empirisch vorgegeben werden.

Zum Bilden dieses Gewichtungsfaktors di wird der Integralwert IW des Intensitätsverlaufs I(t) über das Überlappungsfenster UEF ins Verhältnis zum Gesamtintegralwert IW + IW' des Intensitätsverlaufs I(t) gesetzt. Durch Multiplikation des derart gebildeten Werts di mit dem in Figur 1 in Schritt 3 ermittelten Wert dia ergibt sich somit ein geringerer Korrekturwert des Sensorsignal-Integralwerts zur Ausblendung des Störgeräusches bei der Einspritzung in Abhängigkeit von der Größe des Überlappungsfensters.

Figur 3 zeigt eine Ausführungsform der erfindungsgemäßen Vorrichtung zur Störgeräuschausblendung bei der Klopferfassung einer Brennkraftmaschine zur Umsetzung des mit Bezug auf Fig. 1, 2 und 5 erläuterten Verfahrens.

In Figur 3 bezeichnet KI einen von einem Klopfsensor und einem Klopfsensor-Auswerte-IC herrührenden gestörten Sensorsignal-Integralwert, welcher über ein zeitliches Messfenster MF des Sensorsignals des Klopfsensors gebildet wird. KI' bezeichnet einen korrigierten Sensorsignal-Integralwert, welcher dadurch erhalten wird, dass vom Sensorsignal-Integralwert KI ein Korrekturwert DKI entsprechend einem Störgeräusch während des zeitlichen Messfensters MF subtrahiert wird.

Die Einrichtung 10 in Figur 3 dient zur Berechnung des zeitlichen Überlappungsfensters UEF gemäß Figur 2 aus dem bereit gestellten Messfenster MF und Störfenster, also Einspritzbetätigungsfenster, EF. Das Störfenster kann leicht aus den Motorsteuerungsdaten erhalten werden und das Meßfenster vom Klopfsensor-Auswerte-IC.

Das Überlappungsfenster UEF wird an eine Einrichtung 30 geliefert, welche daraus den Gewichtungsfaktor di bildet, indem sie gemäß der Illustration von Figur 5 den Integralwert IW des Intensitätsverlaufs innerhalb des Überlappungsfensters mit dem Gesamtintegralwert IW+IW' ins Verhältnis setzt. Dieser Gewichtungsfaktor di wird dann in einen Multiplikator 50 eingespeist.

Ebenfalls eingespeist in den Multiplikator 50 wird der maximale integrale Störanteil dia, welcher durch die Einrichtung 20 gemäß der Beschreibung in Zusammenhang mit Figur 1 gebildet wird. Bei der vorliegenden Ausführungsform erfolgt das Bilden dieses maximalen integralen Störsignalbeitrags dia zweckmäßigerweise an einem Arbeitspunkt, an dem keine Klopfregelung aktiv ist, und zwar bei jedem Motorstart erneut, um eine entsprechende Adaption hinsichtlich Alterung bzw. Toleranzen vorzusehen. Durch die Multiplikation des Wertes dia mit dem Wert di im Multiplizierer 50 wird schließlich der Korrekturwert DKI für den Sensorsignal-Integralwert KI gebildet.

Im Zusammenhang mit der obigen Schilderung der Ausführungsform sollte erwähnt werden, dass die Korrektur für jeden Zylinder separat zu erstellen ist, also Zylinder individuell. Die Klopfregelung verwendet den korrigierten Sensorsignal-Integralwert KI' schließlich, um den Referenzpegel zu berechnen und die Klopferkennung in üblicher Weise durchzuführen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Obwohl bei der vorliegenden Erfindung ein Beispiel von einem Störsignal gegeben wurde, welches von einer Einspritzung herrührt, kann die Erfindung für beliebige zeitlich identifizierbare Störsignale verwendet werden.

An Stelle der Speicherung des Intensitätsverlaufs in der Einrichtung zum Bilden des Gewichtungsfaktors aus dem Überlappungsfenster, kann im voraus eine entsprechende Tabelle bzw. Kennlinie abgelegt werden, welche unmittelbar aus dem Anfangswert und Endwert des Überlappungsfensters den Gewichtungsfaktor di ausgibt. Des weiteren können zur Gewichtung auch weitere Faktoren herangezogen werden.

## Patentansprüche

1. Verfahren zur Störgeräuschausblendung bei der Klopferfassung in einer Brennkraftmaschine mit den Schritten:
Bilden eines Sensorsignal-Integralwerts (KI) während eines zeitlichen Meßfensters (MF) des Sensorsignals eines Klopfsensors;
Bilden eines Korrekturwerts (DKI) für den Sensorsignal-Integralwert (KI) entsprechend einem Störgeräusch während des zeitlichen Meßfensters (MF); und
Subtrahieren des Korrekturwerts (DKI) von dem Sensorsignal-Integralwert (KI) zum Bilden eines korrigierten Sensorsignal-Integralwerts (KI') mit ausgeblendetem Störgeräusch,
daduch **gekennzeichnet**, daß
das Bilden des Korrekturwerts (DKI) folgende Schritte aufweist:
Bilden eines maximalen integralen Störsignalanteils (dia);
Erfassen eines zeitlichen Überlappungsfensters (UEF) zwischen dem zeitlichen Meßfenster (MF) und einem zeitlichen Störfenster (EF); und
Gewichten des maximalen integralen Störsignalanteils (dia) mit einem Gewichtungsfaktor (di), welcher basierend auf dem zeitlichen Überlappungsfenster (UEF) gebildet wird.

2. Verfahren nach Anspruch 1, **dadurch gekennzeichnet, daß** zum Bilden des Gewichtungsfaktors (di) ein zeitlicher Intensitätsverlauf (I(t)) des gesamten Störgeräuschs bereitgestellt wird und ein Integralwert (IW) des Intensitätsverlaufs (I(t)) über das Überlappungsfenster (UEF) ins Verhältnis zum Gesamtintegralwert (IW+IW') des Intensitätsverlaufs (I(t)) gesetzt wird.

3. Verfahren nach Anspruch 1 oder 2, **dadurch gekennzeichnet, daß** zum Bilden des maximalen integralen Störsignalanteils (dia) folgende Schritte durchgeführt werden:
relatives zeitliches Vorsehen des zeitlichen Störfensters (EF) und des zeitlichen Meßfensters (MF) derart, daß das zeitliche Störfenster (EF) vollständig im zeitlichen Meßfenster (MF) liegt;
Bilden eines ersten Sensorsignal-Integralwerts (KI1);
relatives zeitliches Vorsehen des zeitlichen Störfensters (EF) und des zeitlichen Meßfensters (MF) derart, daß das zeitliche Störfenster (EF) vollständig außerhalb vom zeitlichen Meßfenster (MF) liegt;
Bilden eines zweiten Sensorsignal-Integralwerts (KI2); und
Subtrahieren des zweiten Sensorsignal-Integralwerts (KI2) vom ersten Sensorsignal-Integralwert (KI1), um den maximalen integralen Störsignalanteils (dia) zu erhalten.

4. Verfahren nach einem der vorhergehenden Ansprüche, **dadurch gekennzeichnet, daß** das Störgeräusch Körperschall ist, welcher von einer Betätigung eines Einspritzventils herrührt.

5. Verfahren nach einem der vorhergehenden Ansprüche, **dadurch gekennzeichnet, daß** das Bilden des maximalen integralen Störsignalanteils (dia) an einem Arbeitspunkt durchgeführt wird, an dem keine Klopfregelung aktiv ist oder sichergestellt ist, dass es zu keinen Klopfern kommt (bspw. geringe Last oder ein fettes Gemisch).

6. Verfahren nach Anspruch 5, **dadurch gekennzeichnet, daß** das Bilden des maximalen integralen Störsignalanteils (dia) bei jedem Motorstart erneut durchgeführt wird.

7. Vorrichtung zur Störgeräuschausblendung bei der Klopferfassung in einer Brennkraftmaschine mit:
einer Einrichtung zum Bilden eines Sensorsignal-Integralwerts (KI) während eines zeitlichen Meßfensters (MF) des Sensorsignals eines Klopfsensors;
einer Einrichtung (10, 20, 30, 50) zum Bilden eines Korrekturwerts (DKI) für den Sensorsignal-Integralwert (KI) entsprechend einem Störgeräusch während des zeitlichen Meßfensters (MF); und
einer Einrichtung (60) zum Subtrahieren des Korrekturwerts (DKI) von dem Sensorsignal-Integralwert (KI) zum Bilden eines korrigierten Sensorsignal-Integralwerts (KI') mit ausgeblendetem Störgeräusch,
**dadurch gekennzeichnet, daß**
die Einrichtung (10, 20, 30, 50) zum Bilden des Korrekturwerts (DKI) aufweist:
eine Einrichtung (20) zum Bilden eines maximalen integralen Störsignalanteils (dia);
eine Einrichtung (20) zum Erfassen eines zeitlichen Überlappungsfensters (UEF) zwischen dem zeitlichen Meßfenster (MF) und einem zeitlichen Störfenster (EF); und
eine Einrichtung (30) zum Bilden eines Gewichtungsfaktors (di) basierend auf dem zeitlichen Überlappungsfenster (UEF); und
eine Einrichtung (50) zum Gewichten des maximalen integralen Störsignalanteils (dia) durch Multiplikation mit dem Gewichtungsfaktor (di).

8. Vorrichtung nach Anspruch 7, **dadurch gekennzeichnet, daß** die Einrichtung (30) zum Bilden des Gewichtungsfaktors (di) einen zeitlicher Intensitätsverlauf (I(t)) des gesamten Störgeräuschs gespeichert hat und einen Integralwert (IW) des Intensitätsverlaufs (I(t)) über das Überlappungsfenster (UEF) ins Verhältnis zum Gesamtintegralwert (IW+IW') des Intensitätsverlaufs (I(t)) setzt.

9. Vorrichtung nach Anspruch 7 oder 8, **dadurch gekennzeichnet, daß** die Einrichtung (20) zum Bilden des maximalen integralen Störsignalanteils (dia) folgende Funktionen durchführen kann:
relatives zeitliches Vorsehen des zeitlichen Störfensters (EF) und des zeitlichen Meßfensters (MF) derart, daß das zeitliche Störfenster (EF) vollständig im zeitlichen Meßfenster (MF) liegt;
Bilden eines ersten Sensorsignal-Integralwerts (KI1);
relatives zeitliches Vorsehen des zeitlichen Störfensters (EF) und des zeitlichen Meßfensters (MF) derart, daß das zeitliche Störfenster (EF) vollständig außerhalb vom zeitlichen Meßfenster (MF) liegt;
Bilden eines zweiten Sensorsignal-Integralwerts (KI2); und
Subtrahieren des zweiten Sensorsignal-Integralwerts (KI2) vom ersten Sensorsignal-Integralwert (KI1).

10. Vorrichtung nach einem der vorhergehenden Ansprüche 7 bis 9, **dadurch gekennzeichnet, daß** das Störgeräusch Körperschall ist, welcher von einer Betätigung eines Einspritzventils herrührt.

## Claims

1. Method for blanking out interference noise during knock recording in an internal combustion engine, having the steps of:
formation of a sensor signal integral value (KI) during a time measurement window (MF) of the sensor signal of a knock sensor;
formation of a correction value (DKI) for the sensor signal integral value (KI) corresponding to an interference noise during the time measurement window (MF); and
subtraction of the correction value (DKI) from the sensor signal integral value (KI) in order to form a corrected sensor signal integral value (KI') with blanked-out interference noise,
**characterized in that** the formation of the correction value (DKI) has the following steps:
formation of a maximum integral interference signal component (dia);
detection of a time overlap window (UEF) between the time measurement window (MF) and a time interference window (EF); and
weighting of the maximum integral interference signal component (dia) with a weighting factor (di) which is formed on the basis of the time overlap window (UEF).

2. Method according to Claim 1, **characterized in that,** in order to form the weighting factor (di), a time intensity profile (I(t)) of the entire interference noise is made available, and a ratio is formed between an integral value (IW) of the intensity profile (I(t)) over the overlap window (UEF) and the total integral value (IW+IW') of the intensity profile (I(t)).

3. Method according to Claim 1 or 2, **characterized in that,** in order to form the maximum integral interference signal component (dia), the following steps are carried out:
relative chronological provision of the time interference window (EF) and of the time measurement window (MF) in such a way that the time interference window (EF) is located completely in the time measurement window (MF);
formation of a first sensor signal integral value (KI1);
relative chronological provision of the time interference window (EF) and of the time measurement window (MF) in such a way that the time interference window (EF) is located completely outside the time measurement window (MF);
formation of a second sensor signal integral value (KI2); and
subtraction of the second sensor signal integral value (KI2) from the first sensor signal integral value (KI1) in order to obtain the maximum integral interference signal component (dia).

4. Method according to one of the preceding claims, **characterized in that** the interference noise is solid-borne sound which originates from activation of an injection valve.

5. Method according to one of the preceding claims, **characterized in that** the formation of the maximum integral interference signal component (dia) is carried out at a working point at which no knock control is active, or it is ensured that knocking does not occur (for example low load or a rich mixture).

6. Method according to Claim 5, **characterized in that** the formation of the maximum integral interference signal component (dia) is carried out anew whenever the engine is started.

7. Device for blanking out interference noise during knock recording in an internal combustion engine, having:
an apparatus for forming a sensor signal integral value (KI) during a time measurement window (MF) of the sensor signal of a knock sensor;
an apparatus (10, 20, 30, 50) for forming a correction value (DKI) for the sensor signal integral value (KI) in accordance with an interference noise during the time measurement window (MF); and
an apparatus (60) for subtracting the correction value (DKI) from the sensor signal integral value (KI) in order to form a corrected sensor signal integral value (KI') with blanked-out interference noise,
**characterized in that** the apparatus (10, 20, 30, 50) for forming the correction value (DKI) has:
an apparatus (20) for forming a maximum integral interference signal component (dia);
an apparatus (20) for recording a time overlap window (UEF) between the time measurement window (MF) and a time interference window (EF); and
an apparatus (30) for performing a weighting factor (di) on the basis of the time overlap window (UEF); and
an apparatus (50) for weighting the maximum integral interference signal component (dia) by multiplication by the weighting factor (di).

8. Device according to Claim 7, **characterized in that** the apparatus (30) for forming the weighting factor (di) has stored a time intensity profile (I(t)) of the entire interference noise and forms a ratio between an integral value (IW) of the intensity profile (I(t)) over the overlap window (UEF) and the total integral value (IW+IW') of the intensity profile (I(t)).

9. Device according to Claims 7 or 8, **characterized in that** the apparatus (20) for forming the maximum integral interference signal component (dia) can carry out the following functions:
relative chronological provision of the time interference window (EF) and of the time measurement window (MF) in such a way that the time interference window (EF) is located completely in the time measurement window (MF);
formation of a first sensor signal integral value (KI1);
relative chronological provision of the time interference window (EF) and of the time measurement window (MF) in such a way that the time interference window (EF) is located completely outside the time measurement window (MF);
formation of a second sensor signal integral value (KI2); and
subtraction of the second sensor signal integral value (KI2) from the first sensor signal integral value (KI1).

10. Device according to one of the preceding Claims 7 to 9, **characterized in that** the interference noise is solid-borne sound which originates from activation of an injection valve.

## Revendications

1. Procédé de blindage contre les bruits parasites dans la détection du cognement dans un moteur à combustion interne, le procédé présentant les étapes qui consistent à :
- former la valeur (KI) de l'intégrale du signal d'un détecteur de cognement dans une fenêtre temporelle de mesure (MF),
- former une valeur (DKI) de correction de la valeur (KI) de l'intégrale du signal du détecteur, qui correspond à un bruit parasite, dans la fenêtre temporelle de mesure (MF) et
- soustraire la valeur (DKI) de correction de la valeur (KI) de l'intégrale du signal du détecteur pour former une valeur corrigée (KI') de l'intégrale du signal du détecteur, d'où le bruit parasite a été extrait,
**caractérisé en ce que**
la formation de la valeur (DKI) de correction comprend les étapes suivantes :
formation de la partie maximale (dia) du signal parasite dans l'intégrale,
détermination d'une fenêtre temporelle de superposition (UEF) entre la fenêtre temporelle de mesure (MF) et une fenêtre temporelle (EF) des parasites et
pondération de la partie maximale (dia) du signal parasite dans l'intégrale par un facteur de pondération (di) formé en fonction de la fenêtre temporelle de superposition (UEF).

2. Procédé selon la revendication 1, **caractérisé en ce que** pour former le facteur de pondération (di), l'évolution temporelle (I(t)) de l'intensité de l'ensemble du bruit parasite est formée et **en ce qu'**une valeur de l'intégrale (IW) de l'évolution d'intensité (I(t)) sur la fenêtre de superposition (UEF) est mise en proportion par rapport à la valeur totale (IW+IW') de l'intégrale de l'évolution de l'intensité (I(t)).

3. Procédé selon les revendications 1 ou 2, **caractérisé en ce que** pour former la partie maximale (dia) du signal parasite dans l'intégrale, les étapes suivantes sont exécutées :
définition temporelle relative de la fenêtre temporelle (EF) des parasites et de la fenêtre temporelle de mesure (MF) de telle sorte que la fenêtre temporelle (EF) des parasites soit entièrement située à l'intérieur de la fenêtre temporelle de mesure (MF),
formation d'une première valeur (KI1) de l'intégrale du signal de détecteur,
définition temporelle relative de la fenêtre temporelle (EF) des parasites et de la fenêtre temporelle de mesure (MF) de telle sorte que la fenêtre temporelle (EF) des parasites soit située entièrement à l'extérieur de la fenêtre temporelle de mesure (MF),
formation d'une deuxième valeur (KI2) de l'intégrale du signal de détecteur et
soustraction de la deuxième valeur (KI2) de l'intégrale du signal de détecteur de la première valeur (KI1) de l'intégrale du signal de détecteur pour obtenir la partie maximale (dia) du signal parasite dans l'intégrale.

4. Procédé selon l'une des revendications précédentes, **caractérisé en ce que** le bruit parasite est un bruit du corps qui provient de l'actionnement d'une soupape d'injection.

5. Procédé selon l'une des revendications précédentes, **caractérisé en ce que** la formation de la partie maximale (dia) du signal parasite dans l'intégrale est réalisée en un point de travail auquel la régulation du cognement n'est pas active ou auquel il est garanti qu'aucun cognement ne survient (par exemple faible charge ou mélange riche).

6. Procédé selon la revendication 5, **caractérisé en ce que** la formation de la partie maximale (dia) du signal parasite dans l'intégrale est réexécutée lors de chaque démarrage du moteur.

7. Dispositif d'extraction des bruits parasites dans la détection du cognement d'un moteur à combustion interne, qui présente :
un dispositif qui forme la valeur (KI) de l'intégrale du signal de détecteur pendant une fenêtre temporelle de mesure (MF) du signal du détecteur de cognement,
un dispositif (10, 20, 30, 50) qui forme une valeur de correction (DKI) de la valeur (KI) de l'intégrale du signal de détecteur, qui correspond à un bruit parasite, dans la fenêtre temporelle de mesure (MF) et
un dispositif (60) qui soustrait la valeur de correction (DKI) de la valeur (KI) de l'intégrale du signal de détecteur pour former la valeur corrigée (KI') de l'intégrale du signal de détecteur d'où le bruit parasite a été extrait,
**caractérisé en ce que**
le dispositif (10, 20, 30, 50) de formation de la valeur de correction (DKI) présente :
un dispositif (20) qui forme la partie maximale (dia) du signal parasite dans l'intégrale,
un dispositif (20) qui détecte la fenêtre temporelle de superposition (UEF) entre la fenêtre temporelle de mesure (MF) et la fenêtre temporelle (EF) des parasites
un dispositif (30) qui forme un facteur de pondération (di) en fonction de la fenêtre temporelle de superposition (UEF) et
un dispositif (50) qui pondère la partie maximale (dia) du signal parasite dans l'intégrale en le multipliant par le facteur de pondération (di).

8. Dispositif selon la revendication 7, **caractérisé en ce que** le dispositif (30) de formation du facteur de pondération (di) a conservé en mémoire une évolution temporelle (I(t)) de l'intensité de la totalité du bruit parasite et met une valeur intégrale (IW) de l'évolution d'intensité (I(t)) dans la fenêtre de superposition (UEF) en proportion par rapport à la valeur totale (IW+IW') de l'intégrale de l'évolution (I(t)) de l'intensité.

9. Dispositif selon les revendications 7 ou 8,
**caractérisé en ce que** le dispositif (20) de formation de la partie maximale (dia) du signal parasite dans l'intégrale peut exécuter les fonctions suivantes :
définition temporelle relative de la fenêtre temporelle (EF) des parasites et de la fenêtre temporelle de mesure (MF) de telle sorte que la fenêtre temporelle (EF) des parasites soit entièrement située à l'intérieur de la fenêtre temporelle de mesure (MF),
formation d'une première valeur (KI1) de l'intégrale du signal de détecteur,
définition temporelle relative de la fenêtre temporelle (EF) des parasites et de la fenêtre temporelle de mesure (MF) de telle sorte que la fenêtre temporelle (EF) des parasites soit située entièrement à l'extérieur de la fenêtre temporelle de mesure (MF),
formation d'une deuxième valeur (KI2) de l'intégrale du signal de détecteur et
soustraction de la deuxième valeur (KI2) de l'intégrale du signal de détecteur de la première valeur (KI1) de l'intégrale du signal de détecteur.

10. Dispositif selon l'une des revendications 7 à 9 qui précèdent, **caractérisé en ce que** le bruit parasite est un bruit du corps qui provient de l'actionnement d'une soupape d'injection.
